(19) Europäisches Patentamt
European Patent Office
Office européen des brevets

(11) **EP 4 668 989 A1**

(12) **EUROPEAN PATENT APPLICATION**
published in accordance with Art. 153(4) EPC

(43) Date of publication:
**24.12.2025 Bulletin 2025/52**

(21) Application number: **23921720.1**

(22) Date of filing: **14.02.2023**

(51) International Patent Classification (IPC):
**H04W 72/30** (2023.01)

(52) Cooperative Patent Classification (CPC):
**H04W 72/0453; H04W 72/232; H04W 72/30; H04W 74/00**

(86) International application number:
**PCT/CN2023/076027**

(87) International publication number:
**WO 2024/168552 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **QIAO, Xuemei**
**Beijing 100085 (CN)**
• **MU, Qin**
**Beijing 100085 (CN)**

(74) Representative: **Stöckeler, Ferdinand et al**
**Schoppe, Zimmermann, Stöckeler Zinkler, Schenk & Partner mbB Patentanwälte Radlkoferstrasse 2 81373 München (DE)**

(54) **PHYSICAL BROADCAST CHANNEL (PBCH) TRANSMISSION METHOD, AND APPARATUS, DEVICE AND STORAGE MEDIUM**

(57) Disclosed in the embodiments of the present disclosure are a physical broadcast channel (PBCH) transmission method, an apparatus, a device, and a storage medium, which can be applied to a communication system. The method comprises: a network device transmitting a PBCH payload of each synchronization signal and PBCH block (SSB) to a user equipment on the basis of a system spectrum which is less than a first bandwidth. By means of the method of the present disclosure, the transmission performance of a PBCH can be effectively improved when frequency resources are limited.

A PBCH payload of each SSB is sent to a terminal based on a system spectrum with a bandwidth less than the first bandwidth. — S201

FIG. 2

EP 4 668 989 A1

**Description**

<u>TECHNICAL FIELD</u>

The disclosure relates to the field of wireless communication technologies, and in particular relates to a method for transmitting a physical broadcast channel (PBCH), an apparatus, a device, and a storage medium.

<u>BACKGROUND</u>

The PBCH is the first channel that a user equipment (UE) needs to decode after completing the detection of the primary synchronization signal and secondary synchronization signal. The PBCH and the demodulation reference signal (DMRS) are contained in the synchronization and physical broadcast channel block (SSB). The content of the PBCH is part of the minimum system information required for the UE to access the new radio (NR) wireless network system, including the master information block (MIB) and other information related to the SSB transmission time.

In related arts, in the NR system, the PBCH usually occupies 20 resource blocks (RBs) for transmission. However, the frequency resources of the private network system are limited, so it is necessary to consider how to improve the transmission performance of the PBCH under the condition of limited frequency resources.

<u>SUMMARY</u>

Embodiments of the disclosure provide a method for transmitting a PBCH, an apparatus, a device, a chip system, a storage medium, a computer program, and a computer program product, which may be applied in the field of communication technologies and may effectively improve the transmission performance of the PBCH under the condition of limited frequency resources.

According to a first aspect of embodiments of the disclosure, a method for transmitting a PBCH is provided, which is performed by a network device. The method includes: sending, based on a system spectrum with a bandwidth less than a first bandwidth, a PBCH payload of each SSB to a terminal.

According to a second aspect of embodiments of the disclosure, a method for transmitting a PBCH is provided, which is performed by a terminal. The method includes: receiving, based on a system spectrum with a bandwidth less than a first bandwidth, a PBCH payload of each SSB sent by a network device.

According to a third aspect of embodiments of the disclosure, a communication apparatus is provided. The communication apparatus has part or all of functions of the network device in the method of the above first aspect. For example, the functions of the communication apparatus may include the functions in some or all of the embodiments of the disclosure, and may also include the functions of independently implementing any one of the embodiments of the disclosure. The functions may be implemented by hardware, or by hardware executing corresponding software. The hardware or software includes one or more units or modules corresponding to the above-mentioned functions.

In some embodiments, the structure of the communication apparatus may include a transceiver module and a processing module, where the processing module is configured to support the communication apparatus in performing corresponding functions in the above method. The transceiver module is configured to support communication between the communication apparatus and other devices. The communication apparatus may also include a storage module, which is coupled with the transceiver module and the processing module and stores necessary computer programs and data for the communication apparatus.

As an example, the processing module may be a processor, the transceiver module may be a transceiver or a communication interface, and the storage module may be a memory.

According to a fourth aspect of embodiments of the disclosure, another communication apparatus is provided. The communication apparatus has part or all of functions of the network device in the method of the above second aspect. For example, the functions of the communication apparatus may include the functions in some or all of the embodiments of the disclosure, and may also include the functions of independently implementing any one of the embodiments of the disclosure. The functions may be implemented by hardware, or by hardware executing corresponding software. The hardware or software includes one or more units or modules corresponding to the above-mentioned functions.

In some embodiments, the structure of the communication apparatus may include a transceiver module and a processing module, where the processing module is configured to support the communication apparatus in performing corresponding functions in the above method. The transceiver module is configured to support communication between the communication apparatus and other devices. The communication apparatus may also include a storage module, which is coupled with the transceiver module and the processing module and stores necessary computer programs and data for the communication apparatus.

According to a fifth aspect of embodiments of the disclosure, a communication apparatus is provided, which includes a processor. When the processor invokes a computer program in a memory, the processor executes the method for transmitting the PBCH of the above first aspect.

According to a sixth aspect of embodiments of the disclosure, a communication apparatus is provided, which includes a processor. When the processor invokes a computer program in a memory, the processor executes the method for transmitting the PBCH of the above second aspect.

According to a seventh aspect of embodiments of the disclosure, a communication apparatus is provided, which includes a processor and a memory. A computer program is stored in the memory, and the processor executes the computer program stored in the memory to enable the communication apparatus to execute the method for transmitting the PBCH of the above first aspect.

According to an eighth aspect of embodiments of the disclosure, a communication apparatus is provided, which includes a processor and a memory. A computer program is stored in the memory, and the processor executes the computer program stored in the memory to enable the communication apparatus to execute the method for transmitting the PBCH of the above second aspect.

According to a ninth aspect of embodiments of the disclosure, a communication apparatus is provided, which includes a processor and an interface circuit. The interface circuit is configured to receive code instructions and transmit the code instructions to the processor, and the processor is configured to run the code instructions to enable the apparatus to execute the method for transmitting the PBCH of the above first aspect.

According to a tenth aspect of embodiments of the disclosure, a communication apparatus is provided, which includes a processor and an interface circuit. The interface circuit is configured to receive code instructions and transmit the code instructions to the processor, and the processor is configured to run the code instructions to enable the apparatus to execute the method for transmitting the PBCH of the above first aspect.

According to a eleventh aspect of embodiments of the disclosure, a communication system is provided, which includes the communication apparatus of the third aspect and the communication apparatus of the fourth aspect; or the system includes the communication apparatus of the fifth aspect and the communication apparatus of the sixth aspect; or the system includes the communication apparatus of the seventh aspect and the communication apparatus of the eighth aspect; or the system includes the communication apparatus of the ninth aspect and the communication apparatus of the tenth aspect.

According to a twelfth aspect of embodiments of the disclosure, a computer-readable storage medium is provided for storing instructions used by the above network device. When the instructions are executed, the network device is caused to execute the method for transmitting the PBCH of the above first aspect.

According to a thirteenth aspect of embodiments of the disclosure, a computer-readable storage medium is provided for storing instructions used by the above network device. When the instructions are executed, the network device is caused to execute the method for transmitting the PBCH of the above second aspect.

According to a fourteenth aspect of embodiments of the disclosure, a computer program product including a computer program is provided, which, when run on a computer, causes the computer to execute the method for transmitting the PBCH of the above first aspect.

According to a fifteenth aspect of embodiments of the disclosure, a computer program product including a computer program is provided, which, when run on a computer, causes the computer to execute the method for transmitting the PBCH of the above second aspect.

According to a sixteenth aspect of embodiments of the disclosure, a chip system is provided, which includes at least one processor and at least one interface. The chip system is configured to support a network device in implementing the functions involved in the first aspect, for example, determining or processing at least one of data or information involved in the above method.

**In** a possible design, the chip system further includes a memory, which is configured to store necessary computer programs and data for the network device. The chip system may be composed of one or more chips, or may include one or more chips and other discrete components.

According to a seventeenth aspect of embodiments of the disclosure, a chip system is provided, which includes at least one processor and at least one interface. The chip system is configured to support a terminal in implementing the functions involved in the second aspect, for example, determining or processing at least one of data or information involved in the above method.

In a possible design, the chip system further includes a memory, which is configured to store necessary computer programs and data for the network device. The chip system may be composed of one or more chips, or may include one or more chips and other discrete components.

According to an eighteenth aspect of embodiments of the disclosure, a computer program is provided, which, when run on a computer, causes the computer to execute the method for transmitting the PBCH of the above first aspect.

According to a nineteenth aspect of embodiments of the disclosure, a computer program is provided, which, when run on a computer, causes the computer to execute the method for transmitting the PBCH of the above second aspect.

To sum up, the method for transmitting the PBCH, the apparatus, the device, the chip system, the storage medium, the computer program, and the computer program product provided in the embodiments of the disclosure may achieve the following technical effects.

The network device sends, based on the system spectrum with the bandwidth less than the first bandwidth, the PBCH payload of each SSB to the terminal, which may effectively improve the transmission performance of the PBCH under the condition of limited frequency resources.

## BRIEF DESCRIPTION OF THE DRAWINGS

To better illustrate technical solutions in embodiments of the disclosure or the background art, the accompanying drawings required in the embodiments of the disclosure or the background art will be described below.

FIG. 1 is an architecture schematic diagram of a communication system according to an embodiment of the disclosure.

FIG. 2 is a schematic flowchart of a method for transmitting a PBCH according to an embodiment of the disclosure.

FIG. 3 is a schematic flowchart of a method for transmitting a PBCH according to another embodiment of the disclosure.

FIG. 4 is schematic flowchart of a method for transmitting a PBCH according to yet another embodiment of the disclosure.

FIG. 5 is schematic flowchart of a method for transmitting a PBCH according to yet another embodiment of the disclosure.

FIG. 6 is schematic flowchart of a method for transmitting a PBCH according to yet another embodiment of the disclosure.

FIG. 7 is a schematic flowchart of a method for transmitting a PBCH according to yet another embodiment of the disclosure.

FIG. 8 is a schematic flowchart of a method for transmitting a PBCH according to yet another embodiment of the disclosure.

FIG. 9 is a schematic flowchart of a method for transmitting a PBCH according to yet another embodiment of the disclosure.

FIG. 10 is a schematic diagram of a communication apparatus according to an embodiment of the disclosure.

FIG. 11 is a schematic diagram of a communication apparatus according to another embodiment of the disclosure.

FIG. 12 is a schematic diagram of a chip according to an embodiment of the disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

To facilitate understanding, first, the terms involved in the disclosure are introduced.

1. PBCH.

The PBCH is the first channel that the UE needs to decode after completing the detection of the primary synchronization signal and secondary synchronization signal.

2. Control resource set (CORESET).

The CORESET is a time-frequency region for sending a physical downlink control channel (PDCCH) (downlink control information (DCI) may be carried by the PDCCH).

3. Type0-PDCCH CSS is a type of common search space (CSS).
4. A control resource set #0 (CORESET#0) refers to an abbreviated name of the CORESET of Type0-PDCCH CSS in protocol specifications.

To better understand the method for transmitting a PBCH disclosed in embodiments of the disclosure, a communication system applicable to the embodiments of the disclosure is first described below.

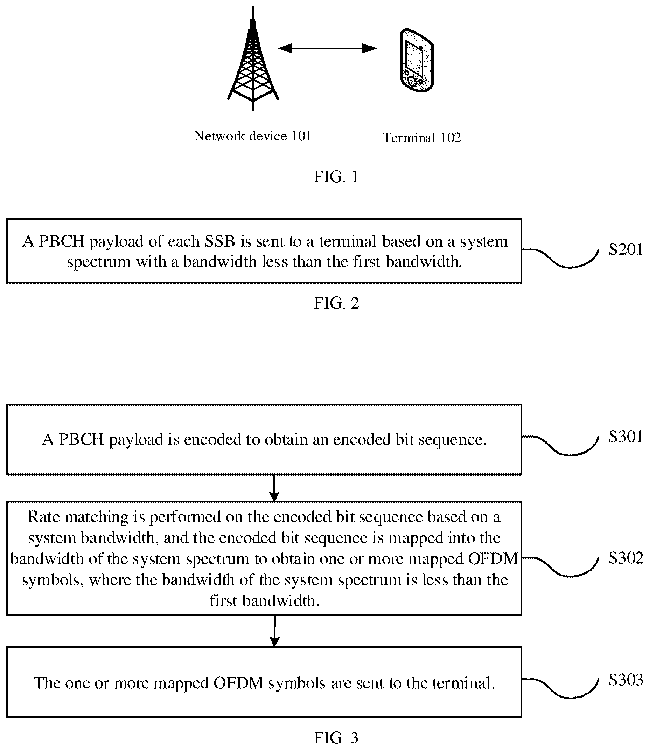

Referring to FIG. 1, FIG. 1 is an architecture schematic diagram of a communication system according to an embodiment of the disclosure. The communication system may include, but is not limited to, one network device and one terminal. The number and form of devices shown in FIG. 1 are only for illustration and do not limit the embodiments of the disclosure. In practical applications, the communication system may include two or more network devices and two or more terminals. The communication system shown in FIG. 1 includes one network device 101 and one terminal 102 as an example.

It should be noted that the technical solutions of the embodiments of the disclosure may be applied to various communication systems, for example, long term evolution (LTE) system, 5th generation (5G) mobile communication system, 5G NR system, or other future new mobile communication systems, etc.

The network device 101 in the embodiments of the disclosure is an entity on the network side for transmitting or receiving signals. For example, the network device 101 may be an evolved NodeB (eNB), a transmission reception point (TRP), a next generation NodeB (gNB) in the NR system, a private network system, a base station in other future mobile communication systems, or an access node in a wireless fidelity (WiFi) system, etc. The embodiments of the disclosure do not limit the specific technologies and specific device forms adopted by the network device.

The network device provided in the embodiments of the disclosure may be composed of a central unit (CU) and a distributed unit (DU), where the CU may also be called a control unit. The structure CU-DU may be used to split protocol layers of the network device, such as a base station. Functions of some protocol layers are placed in the CU for centralized control, and functions of the remaining part or all of the protocol layers are distributed in the DU, with the CU centrally controlling the DU.

The terminal 102 in the embodiments of the disclosure is an entity on the user side for receiving or transmitting signals, such as a mobile phone. The terminal may also be called a terminal, a UE, a mobile station (MS), a mobile terminal (MT), etc. The terminal may be a car with communication functions, a smart car, a mobile phone, a wearable device, a Pad, a computer with wireless receiving/sending functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, and so on.

The embodiments of the disclosure do not limit the specific technologies and specific device forms adopted by the terminal.

It may be understood that the communication system described in the embodiments of the disclosure is intended to more clearly illustrate the technical solutions of the embodiments of the disclosure, and does not constitute a limitation on the technical solutions provided by the embodiments of the disclosure. Those of ordinary skill in the art will know that with an evolution of a system architecture and an emergence of new service scenarios, the technical solutions provided by the embodiments of the disclosure are equally applicable to similar technical problems.

It should be noted that a method for transmitting a PBCH provided by any embodiment of the disclosure may be executed independently, or in combination with possible implementation methods in other embodiments, and may also be executed in combination with any technical solution in related arts.

A method for transmitting a PBCH and an apparatus for transmitting a PBCH provided by the disclosure will be introduced in detail below with reference to the accompanying drawings. FIG. 2 is a schematic flowchart of a method for transmitting a PBCH according to an embodiment of the disclosure, and the method is executed by a network device. The method for transmitting the PBCH in this embodiment may be applied into the network device, which is not limited herein.

As shown in FIG. 2, the method may include but is not limited to the following steps.

At S201, a PBCH payload of each SSB is sent to a terminal based on a system spectrum with a bandwidth less than the first bandwidth.

The first bandwidth may refer to a bandwidth of a system with limited frequency resources.

In some embodiments, the first bandwidth may be, for example, a bandwidth capable of providing a communication service for a private network system. The private network system is, for example, a system that provides the communication service for dedicated services such as a power system, a railway system, a public protection and disaster relief. The first bandwidth may specifically be 5 megahertz (MHz), for example. The first bandwidth may also be any other possible bandwidth value, which is not limited herein.

It should be noted that in some versions of communication protocols (for example, the R18 (Release 18) communication protocol), some dedicated spectrums (n8, n26, n28, n100) may support NR technology, and these dedicated spectrums (n8, n26, n28, n100) usually provide the communication service for the above private network system. The above dedicated spectrums only support a sub-carrier spacing (SCS) of 15 kilohertz (KHz), and supported system bandwidths include 5MHz and 3MHz. According to the regulations of NR and LTE on radio frequency (RF) channel bandwidth, the number of available RBs for 5MHz is 25. According to the regulations of LTE on RF channel bandwidth, the number of available RBs for 3MHz is 15. In the NR system, the PBCH usually occupies 20 RBs for transmission, while the frequency resources of the private network system (i.e., 3MHz (15 RBs) and 2.8MHz~3.6MHz) are limited. Therefore, it is necessary to consider how to improve the transmission performance of the PBCH under the condition of limited frequency resources.

According to embodiments of the disclosure, the PBCH payload of each SSB may be sent to the terminal based on the system spectrum with the bandwidth less than the first bandwidth, thereby effectively improving the transmission performance of the PBCH under the condition of limited frequency resources.

That is, in the embodiments of the disclosure, the network device may send the PBCH payload of each SSB to the terminal based on the system spectrum with the bandwidth less than the first bandwidth. For example, the PBCH payload of each SSB in an SSB burst set may be sent based on a system spectrum with a bandwidth less than 5MHz.

In the embodiments, by sending the PBCH payload of each SSB to the terminal based on the system spectrum with the bandwidth less than the first bandwidth, the transmission performance of the PBCH may be effectively improved under the condition of limited frequency resources.

In some embodiments of the disclosure, the first bandwidth is 5MHz, thereby enabling the PBCH payload of each SSB to be sent to the terminal based on the system spectrum with the bandwidth less than 5MHz.

In some embodiments of the disclosure, the bandwidth of the system spectrum may be at least one of 3MHz, 2.8MHz, 3.6MHz, or a bandwidth value between 2.8MHz and 3.6MHz, which is not limited herein.

Therefore, in the embodiments of the disclosure, it is possible to transmit the PBCH payload of each SSB to the terminal based on a personalized system spectrum, ensuring that under conditions of different frequency resources, improved PBCH transmission performances may be achieved.

In some embodiments of the disclosure, the PBCH payload may not carry one or more of a common sub-carrier spacing (subCarrierSpacingCommon), a spare, a message class extension spare (messageClassExtension), a parameter $a_{A+6}$, a parameter $a_{A+7}$, or SSB index information. Therefore, under the condition of limited frequency resources, a low code rate may be effectively maintained, thereby greatly improving the transmission performance of the PBCH.

That is, in the embodiments of the disclosure, the PBCH payload of each SSB is supported to be pruned, and the pruned PBCH payload (PBCH payload size) does not carry one or more of subCarrierSpacing-Common, spare, messageClassExtension, the parameter $a_{A+6}$, the parameter $a_{A+7}$, or the SSB index information.

For example, considering that the dedicated spectrum usually only supports a 15KHz SCS, a subCarrierSpacingCommon field in a MIB may be removed. The subCarrierSpacingCommon field indicates an SCS for an initial access message and a system message (such as Msg2), etc. A spare field and a messageClassExtension field (1bit) may also be removed to reduce the PBCH payload as much as possible.

For example, one or more bits provided by a physical layer(s) in the PBCH payload may also be pruned to further reduce the PBCH payload.

For example, the lowest two reserved bits provided by the physical layer(s) in the PBCH payload may also be removed. Since some dedicated spectrums (n8, n26, n28, n100) are all spectrums with a bandwidth below 3GHz, under their SSB time-domain position distribution, there are at most 4 SSB indexes. Therefore, the SSB index information is carried in a DMRS sequence, and the PBCH payload does not contain the SSB index information. Therefore, the parameters $a_{A+6}$ and/or $a_{A+7}$ of the reserved bits provided by the physical layer may be removed.

In some embodiments of the disclosure, the PBCH payload may include an SSB subcarrier offset indication. The SSB subcarrier offset indication is configured via ssb-SubcarrierOffset, a configuration parameter of the SSB subcarrier offset indication do not include (i.e. exclude) a parameter $a_{A+5}$, and a range of a valid subcarrier offset value indicated by the SSB subcarrier offset indication is $0 \leq k_{ssb} \leq 11$. A carrier frequency belongs to a frequency range 1 (FR1). The $k_{ssb}$ represents the valid subcarrier offset value. Therefore, bits occupied by the SSB subcarrier offset indication may be reduced, so as to flexibly reduce the PBCH payload.

That is, in the embodiments of the disclosure, considering that the dedicated spectrum usually only supports the 15KHz SCS, 1 bit occupied by the most significant bit (MSB) of $k_{ssb}$ may be removed. In other words, for the dedicated spectrum with the FR1 less than 5MHz, 4 bits indicates the $k_{ssb}$, and the range of the valid subcarrier offset value of the $k_{ssb}$ is $0 \leq k_{ssb} \leq 11$.

In some embodiments of the disclosure, the PBCH payload may further include a parameter PDCCH configuration for system information block 1 (PDCCH-ConfigSIB1). The parameter PDCCH-ConfigSIB 1 excludes 4 MSBs of controlResourceSetZero, and a CORESET#0 associated with the SSB uses a fixed time-frequency domain bandwidth, thereby flexibly reducing the PBCH payload.

The parameter PDCCH-ConfigSIB1 may be used to configure the CORESET and a monitoring occasion of the Type0-PDCCH CSS. The CORESET#0 refers to the abbreviated name of the CORESET of the Type0-PDCCH CSS in the protocol specification. The Type0-PDCCH CSS is a type of CSS.

In some embodiments, time-frequency resource information of the CORESET#0 may be determined by looking up a table via a controlResourceSet-Zero field with the 4 MSBs in PDCCH-ConfigSIB1.

In some embodiments, the SSB may carry configuration information of the associated CORESET#0 and the monitoring occasion of the Type0-PDCCH CSS.

In the embodiments of the disclosure, for the configuration of CORESET#0, one possible implementation is to use a fixed time-frequency domain bandwidth of CORESET#0. For example, the CORESET#0 fixedly uses a configuration of {3 orthogonal frequency division multiplexing (OFDM) symbols, full bandwidth}. Therefore, the 4 MSBs of PDCCH-ConfigSIB1 may be removed. That is, the parameter PDCCH-ConfigSIB1 does not carry the 4 MSBs of controlResourceSetZero.

In some embodiments of the disclosure, the PBCH payload may further include a parameter controlResourceSetZero, and the parameter controlResourceSetZero includes only at least one of: N least significant bits (LSBs), in which the N LSBs indicate one or more configuration parameters of first n rows in a CORESET#0 configuration table, where N is less than 4, n is less than or equal to 8, and both N and n are positive integers; or M bits, in which the M bits indicate a number of symbols occupied by a CORESET#0, M is less than 4, and M is a positive integer. This effectively reduces a number of bits occupied by the parameter controlResourceSetZero in the PBCH payload, thereby flexibly reducing the PBCH payload.

In some embodiments of the disclosure, the CORESET#0 occupies an entire frequency domain channel bandwidth, which is not limited herein.

That is, the parameter controlResourceSetZero in the PBCH payload may only include N LSBs, where the N LSBs indicate one or more configuration parameters of the first n rows in the CORESET#0 configuration table, N is less than 4, n is less than or equal to 8, and both N and n are positive integers. Alternatively, the parameter controlResourceSetZero in the PBCH payload may only include M bits, where the M bits indicate the number of symbols occupied by the CORESET#0, M is less than 4, the CORESET#0 occupies the entire frequency domain channel bandwidth, and M is a positive integer, which is not limited herein.

In some embodiments, the N LSBs indicate the one or more configuration parameters of the first n rows in the CORESET#0 configuration table, where N is less than 4 and n is less than or equal to 8. For example, if N is 3 and n is 8, the 3 LSBs indicate configuration parameters of the first 8 rows in the CORESET#0 configuration table. In some embodiments, N may also be any positive integer less than 4, n may be any positive integer less than or equal to 8, and M may also be any positive integer less than 4, which is not limited herein.

For example, in some embodiments, a part of bits of PDCCH-ConfigSIB1 indicates a partially valid CORESET#0 configuration of the CORESET#0. For instance, 3 LSBs are reserved to indicate the first n rows (n ≤ 8) in the CORESET#0 configuration table. Alternatively, the CORESET#0 may occupy the entire frequency domain channel bandwidth. Therefore, there is no need to indicate a frequency domain resource width for the CORESET#0 again, and only M bits are needed to indicate the number of symbols occupied by the CORESET#0 (where M<4). Therefore, some invalid bits may be removed to minimize the PBCH payload as much as possible.

In some embodiments of the disclosure, a length of cyclic redundancy check (CRC) bits corresponding to the PBCH payload may be further pruned. A number of CRC bits of the PBCH transmitted by a dedicated spectrum system with a bandwidth less than 5MHz is one of 16 bits, 19 bits, or 21 bits, which may effectively reduce the number of bits occupied by CRC, thereby flexibly reducing the PBCH payload.

It should be noted that the method for transmitting the PBCH provided in any of the above embodiments of the disclosure may be implemented independently, or in combination with possible implementation methods in other embodiments, or in combination with any technical solution in related art.

Therefore, in the embodiments of the disclosure, the method for effectively reducing the PBCH payload may be flexibly selected, which enables maintaining a low code rate under the condition of limited frequency resources, thereby significantly improving the transmission performance of the PBCH and minimizing a system resource overhead used for periodically broadcasting the PBCH.

FIG. 3 is a schematic flowchart of a method for transmitting a PBCH according to another embodiment of the disclosure, which is performed by a network device. The method for transmitting the PBCH in this embodiment may be applied into the network device, which is not limited herein.

As shown in FIG. 3, the method may include but is not limited to the following steps.

At S301, a PBCH payload is encoded to obtain an encoded bit sequence.

In some embodiments, after determining the PBCH payload, polar coding may be performed on the PBCH payload, and the bit sequence obtained from the polar coding may be referred to as the encoded bit sequence, which is not limited herein.

At S302, rate matching is performed on the encoded bit sequence based on a system bandwidth, and the encoded bit sequence is mapped into the bandwidth of the system spectrum to obtain one or more mapped OFDM symbols, where the bandwidth of the system spectrum is less than the first bandwidth.

In some embodiments, the system bandwidth may also be less than the first bandwidth. For the description of the first bandwidth, reference may be made to the above embodiments, which will not be repeated here.

After encoding the PBCH payload to obtain the encoded bit sequence, the rate matching may be directly performed on the encoded bit sequence based on the system bandwidth, and the encoded bit sequence may be mapped to the bandwidth of the system spectrum to obtain the one or more mapped OFDM symbol, and then step S303 is executed.

At S303, the one or more mapped OFDM symbols are sent to the terminal.

In some embodiments, the one or more mapped OFDM symbol may be sent to the terminal based on the system spectrum, which is not limited herein.

For example, encoded bits (the encoded bits are an optional example of the encoded bit sequence) are mapped to a 3MHz system bandwidth (or a system bandwidth less than or equal to 3MHz (including 15 RBs or 16 RBs)) via the rate matching, which is not limited herein.

Therefore, in this embodiment, by encoding the PBCH payload to obtain the encoded bit sequence, performing the rate matching on the encoded bit sequence based on the system bandwidth, mapping the encoded bit sequence into the bandwidth of the system spectrum to obtain the one or more mapped OFDM symbols, and sending the one or more mapped OFDM symbols to the terminal, the PBCH may be effectively transmitted at a lower code rate under the condition of limited frequency resources, which thus greatly improves the transmission performance of the PBCH and is effectively applicable to a personalized private network system.

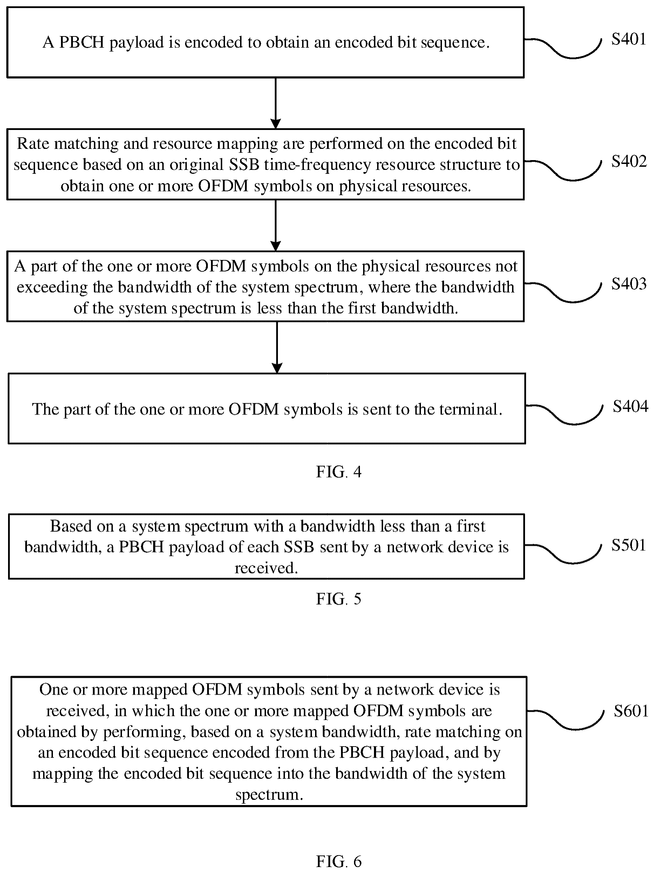

FIG. 4 is schematic flowchart of a method for transmitting a PBCH according to yet another embodiment of the disclosure, which is performed by a network device. The method for transmitting the PBCH in this embodiment may be applied into the network device, which is not limited herein.

As shown in FIG. 4, the method may include but is not limited to the following steps.

At S401, a PBCH payload is encoded to obtain an encoded bit sequence.

In some embodiments, after determining the PBCH payload, polar coding may be performed on the PBCH payload, and the bit sequence obtained from the polar coding may be referred to as the encoded bit sequence, which is not limited herein.

At S402, rate matching and resource mapping are performed on the encoded bit sequence based on an original SSB time-frequency resource structure to obtain one or more OFDM symbols on physical resources.

The SSB time-frequency resource structure is configured to describe a time-frequency resource distribution of the SSB.

In some embodiments, the rate matching and resource mapping may be performed on the encoded bit sequence based on the SSB time-frequency resource structure, so that the one or more OFDM symbols on the physical resources may be obtained.

At S403, a part of the one or more OFDM symbols on the physical resources not exceeding the bandwidth of the system spectrum, where the bandwidth of the system spectrum is less than the first bandwidth.

Since the rate matching and resource mapping are performed on the encoded bit sequence based on the SSB time-frequency resource structure, the one or more OFDM symbols on the physical resources may include one or more OFDM symbols exceeding the bandwidth of the system spectrum. In the embodiments of the disclosure, the one or more OFDM symbols exceeding the bandwidth of the system spectrum may be deleted, and the part of the one or more OFDM symbols on the physical resources not exceeding the bandwidth of the system spectrum is retained. Then, step S404 is executed.

At S404: the part of the one or more OFDM symbols is sent to the terminal.

In some embodiments, the part of the one or more OFDM symbols not exceeding the bandwidth of the system spectrum may be sent to the terminal based on the system spectrum, which is not limited herein.

For example, for encoded bits (the encoded bits are an optional example of the encoded bit sequence), the rate matching and the resource mapping are still performed using the SSB time-frequency resource structure (including 20 RBs) in related arts. Then the symbols on the physical resources exceeding the system bandwidth are punctured by means of puncturing, followed by an OFDM modulation and a data transmission, which is not limited herein.

Therefore, in this embodiment, by encoding the PBCH payload to obtain the encoded bit sequence, performing the rate matching and the resource mapping on the encoded bit sequence based on the SSB time-frequency resource structure to obtain one or more OFDM symbols on physical resources, retaining the part of the one or more OFDM symbols on the physical resources not exceeding the bandwidth of the system spectrum, and sending the part of the one or more OFDM symbols to the terminal, the PBCH may be effectively transmitted at the lower code rate under the condition of limited frequency resources, which thus greatly improves the transmission performance of the PBCH. Moreover, it makes the method for transmitting the PBCH more flexible and effectively applicable to the personalized private network system.

It should be noted that, in the following embodiments, for descriptions of terms and method steps that are the same as or corresponding to those in the above embodiments reference may be made to the above embodiments in detail, and details will not be repeated here.

FIG. 5 is schematic flowchart of a method for transmitting a PBCH according to yet another embodiment of the disclosure, and the method is performed by a terminal. The method for transmitting the PBCH in this embodiment may be applied into the terminal, which is not limited herein.

As shown in FIG. 5, the method may include but is not limited to the following steps.

At S501, based on a system spectrum with a bandwidth less than a first bandwidth, a PBCH payload of each SSB sent by a network device is received.

The first bandwidth may refer to a bandwidth of a system with limited frequency resources.

In some embodiments, the first bandwidth may be, for example, a bandwidth capable of providing a communication service for a private network system. The private network system is, for example, a system that provides the communication service for dedicated services such as a power system, a railway system, a public protection and disaster relief. The first bandwidth may specifically be 5 MHz, for example. The first bandwidth may also be any other possible bandwidth value, which is not limited herein.

According to embodiments of the disclosure, the PBCH payload of each SSB sent by the network device may be received based on the system spectrum with the bandwidth less than the first bandwidth, thereby effectively improving the transmission performance of the PBCH under the condition of limited frequency resources.

That is, in the embodiments of the disclosure, the network device may send the PBCH payload of each SSB to the terminal based on the system spectrum with the bandwidth less than the first bandwidth. For example, the PBCH payload of each SSB in an SSB burst set may be sent based on a system spectrum with a bandwidth less than 5MHz. The terminal may receive, based on the system spectrum with the bandwidth less than the first bandwidth, the PBCH payload of each SSB sent by the network device.

In the embodiments, by receiving, based on the system spectrum with the bandwidth less than the first bandwidth, the PBCH payload of each SSB sent by the network device, the transmission performance of the PBCH may be effectively improved under the condition of limited frequency resources.

In some embodiments of the disclosure, the first bandwidth is 5MHz, thereby enabling the PBCH payload of each SSB to be sent to the terminal based on the system spectrum with the bandwidth less than 5MHz.

In some embodiments of the disclosure, the bandwidth of the system spectrum may be at least one of 3MHz, 2.8MHz, 3.6MHz, or a bandwidth value between 2.8MHz and 3.6MHz, which is not limited herein.

Therefore, in the embodiments of the disclosure, it is possible to transmit the PBCH payload of each SSB to the terminal based on a personalized system spectrum, ensuring that under conditions of different frequency resources, improved PBCH transmission performances may be achieved.

In some embodiments of the disclosure, the PBCH payload may not carry one or more of a common sub-carrier spacing (subCarrierSpacingCommon), a spare, a message class extension spare (messageClassExtension), a parameter $a_{A+6}$, a parameter $a_{A+7}$, or SSB index information. Therefore, under the condition of limited frequency resources, a low code rate may be effectively maintained, thereby greatly improving transmission performance of the PBCH.

That is, in the embodiments of the disclosure, the PBCH payload of each SSB is supported to be pruned, and the pruned PBCH payload (PBCH payload size) does not carry one or more of subCarrierSpacingCommon, spare, messageClassExtension, the parameter $a_{A+6}$, the parameter $a_{A+7}$, or the SSB index information.

For example, considering that the dedicated spectrum usually only supports a 15KHz SCS, a sub-

CarrierSpacingCommon field in a MIB may be removed. The subCarrierSpacingCommon field indicates an SCS for an initial access message and a system message (such as Msg2), etc. A spare field and a messageClassExtension field (1bit) may also be removed to reduce the PBCH payload as much as possible.

For example, one or more bits provided by a physical layer(s) in the PBCH payload may also be pruned to further reduce the PBCH payload.

For example, the lowest two reserved bits provided by the physical layer(s) in the PBCH payload may also be removed. Since some dedicated spectrums (n8, n26, n28, n100) are all spectrums with a bandwidth below 3GHz, under their SSB time-domain position distribution, there are at most 4 SSB indexes. Therefore, the SSB index information is carried in a DMRS sequence, and the PBCH payload does not contain the SSB index information. Therefore, the parameters $a_{A+6}$ and/or $a_{A+7}$ of the reserved bits provided by the physical layer(s) may be removed.

In some embodiments of the disclosure, the PBCH payload may include an SSB subcarrier offset indication. The SSB subcarrier offset indication is configured via ssb-SubcarrierOffset, a configuration parameter of the SSB subcarrier offset indication excludes a parameter $a_{A+5}$, and a range of a valid subcarrier offset value indicated by the SSB subcarrier offset indication is $0 \le k_{ssb} \le 11$. A carrier frequency belongs to a FR1. The $k_{ssb}$ represents the valid subcarrier offset value. Therefore, bits occupied by the SSB subcarrier offset indication may be reduced, so as to flexibly reduce the PBCH payload.

That is, in the embodiments of the disclosure, considering that the dedicated spectrum usually only supports the 15KHz SCS, 1 bit occupied by the MSB of $k_{ssb}$ may be removed. In other words, for the dedicated spectrum with the FR1 less than 5MHz, 4 bits indicates the $k_{ssb}$, and the range of the valid subcarrier offset value of the $k_{ssb}$ is $0 \le k_{ssb} \le 11$.

In some embodiments of the disclosure, the PBCH payload may further include a parameter PDCCH-ConfigSIB1. The parameter PDCCH-ConfigSIB1 excludes 4 MSBs of controlResourceSetZero, and a CORESET#0 associated with the SSB uses a fixed time-frequency domain bandwidth, thereby flexibly reducing the PBCH payload.

The parameter PDCCH-ConfigSIB1 may be used to configure the CORESET and a monitoring occasion of the Type0-PDCCH CSS. The CORESET#0 refers to the abbreviated name of the CORESET of the Type0-PDCCH CSS in the protocol specification. The Type0-PDCCH CSS is a type of CSS.

In some embodiments, time-frequency resource information of the CORESET#0 may be determined by looking up a table via a controlResourceSetZero field with the 4 MSBs in PDCCH-ConfigSIB1.

In some embodiments, the SSB may carry configuration information of the associated CORESET#0 and the monitoring occasion of the Type0-PDCCH CSS.

In the embodiments of the disclosure, for the configuration of CORESET#0, one possible implementation is to use a fixed time-frequency domain bandwidth of CORESET#0. For example, the CORESET#0 fixedly uses a configuration of {3 OFDM symbols, full bandwidth}. Therefore, the 4 MSBs of PDCCH-ConfigSIB1 may be removed. That is, the parameter PDCCH-ConfigSIB1 does not carry the 4 MSBs of controlResourceSetZero.

In some embodiments of the disclosure, the PBCH payload may further include a parameter controlResourceSetZero, and the parameter controlResourceSetZero includes only at least one of: N LSBs, in which the N LSBs indicate one or more configuration parameters of first n rows in a CORESET#0 configuration table, where N is less than 4, n is less than or equal to 8, and both N and n are positive integers; or M bits, in which the M bits indicate a number of symbols occupied by a CORESET#0, M is less than 4, and M is a positive integer. This effectively reduces a number of bits occupied by the parameter controlResourceSetZero in the PBCH payload, thereby flexibly reducing the PBCH payload.

In some embodiments of the disclosure, the CORESET#0 occupies an entire frequency domain channel bandwidth, which is not limited herein.

That is, the parameter controlResourceSetZero in the PBCH payload may only include N LSBs, where the N LSBs indicate one or more configuration parameters of the first n rows in the CORESET#0 configuration table, N is less than 4, n is less than or equal to 8, and both N and n are positive integers. Alternatively, the parameter controlResourceSetZero in the PBCH payload may only include M bits, where the M bits indicate the number of symbols occupied by the CORESET#0, M is less than 4, the CORESET#0 occupies the entire frequency domain channel bandwidth, and M is a positive integer, which is not limited herein.

In some embodiments, the N LSBs indicate the one or more configuration parameters of the first n rows in the CORESET#0 configuration table, where N is less than 4 and n is less than or equal to 8. For example, if N is 3 and n is 8, the 3 LSBs indicate configuration parameters of the first 8 rows in the CORESET#0 configuration table. In some embodiments, N may also be any positive integer less than 4, n may be any positive integer less than or equal to 8, and M may also be any positive integer less than 4, which is not limited herein.

For example, in some embodiments, a part of bits of PDCCH-ConfigSIB1 indicates a partially valid CORESET#0 configuration of the CORESET#0. For instance, 3 LSBs are reserved to indicate the first n rows (n ≤8) in the CORESET#0 configuration table. Alternatively, the CORESET#0 may occupy the entire frequency domain channel bandwidth. Therefore, there is no need to indicate a frequency domain resource width for the CORESET#0 again, and only M bits are needed to indicate the number of symbols occupied by the CORESET#0 (where M<4). Therefore, some invalid bits may be removed to minimize the PBCH payload as much as possible.

In some embodiments of the disclosure, a length of CRC bits corresponding to the PBCH payload may be further pruned. A number of CRC bits of the PBCH transmitted by a dedicated spectrum system with a bandwidth less than 5MHz is one of 16 bits, 19 bits, or 21 bits, which may effectively reduce the number of bits occupied by CRC, thereby flexibly reducing the PBCH payload.

It should be noted that the method for transmitting the PBCH provided in any of the above embodiments of the disclosure may be implemented independently, or in combination with possible implementation methods in other embodiments, or in combination with any technical solution in related art.

Therefore, in the embodiments of the disclosure, the method for effectively reducing the PBCH payload may be flexibly selected, which enables maintaining a low code rate under the condition of limited frequency resources, thereby significantly improving the transmission performance of the PBCH and minimizing a system resource overhead used for periodically broadcasting the PBCH.

FIG. 6 is a schematic flowchart of a method for transmitting a PBCH according to yet another embodiment of the disclosure, which is performed by a terminal. The method for transmitting the PBCH in this embodiment may be applied into the terminal, which is not limited herein.

As shown in FIG. 6, the method may include but is not limited to the following steps.

At S601, one or more mapped OFDM symbols sent by a network device is received, in which the one or more mapped OFDM symbols are obtained by performing, based on a system bandwidth, rate matching on an encoded bit sequence encoded from the PBCH payload, and by mapping the encoded bit sequence into the bandwidth of the system spectrum.

In some embodiments, the one or more mapped OFDM symbols sent by the network device may be received based on the system spectrum, which is not limited herein.

In this embodiment, by receiving the one or more mapped OFDM symbols sent by the network device. The one or more mapped OFDM symbols are obtained by performing, based on a system bandwidth, the rate matching on the encoded bit sequence encoded from the PBCH payload, and by mapping the encoded bit sequence into the bandwidth of the system spectrum. The PBCH may be effectively transmitted at a lower code rate under the condition of limited frequency resources, which thus greatly improves the transmission performance of the PBCH and is effectively applicable to the personalized private network system.

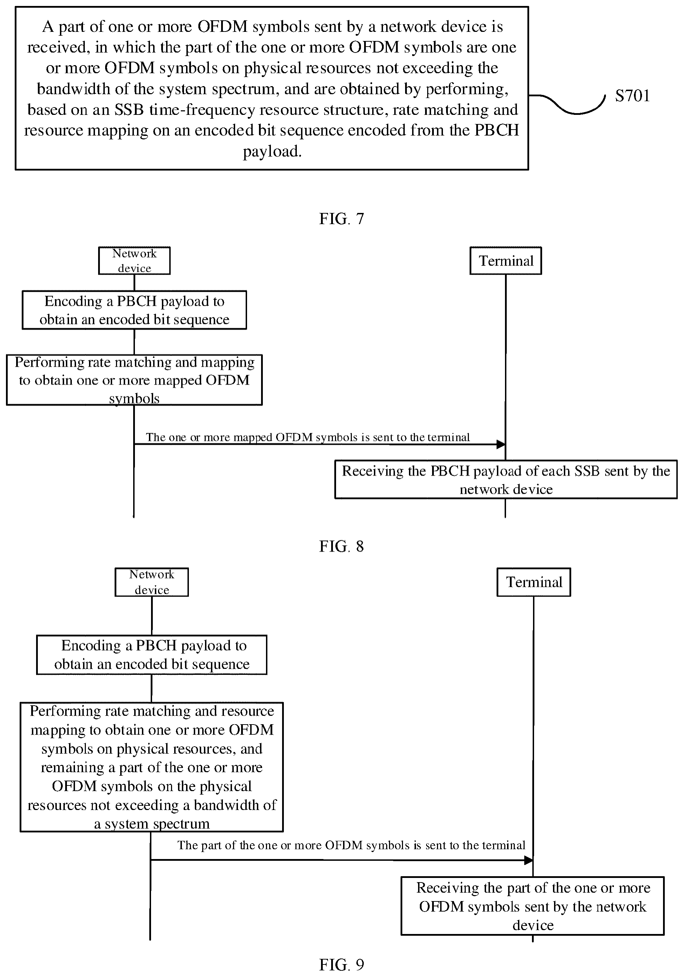

FIG. 7 is a schematic flowchart of a method for transmitting a PBCH according to yet another embodiment of the disclosure, which is performed by a terminal. The method for transmitting the PBCH in this embodiment may be applied into the terminal, which is not limited herein.

As shown in FIG. 7, the method may include but is not limited to the following steps.

At S701, a part of one or more OFDM symbols sent by a network device is received, in which the part of the one or more OFDM symbols are one or more OFDM symbols on physical resources not exceeding the bandwidth of the system spectrum, and are obtained by performing, based on an SSB time-frequency resource structure, rate matching and resource mapping on an encoded bit sequence encoded from the PBCH payload.

In some embodiments, one or more OFDM symbols obtained by mapping sent by the network device may be received based on the system spectrum, which is not limited herein.

In this embodiment, by encoding the PBCH payload to obtain the encoded bit sequence, performing the rate matching and the resource mapping on the encoded bit sequence based on the SSB time-frequency resource structure to obtain one or more OFDM symbols on physical resources, retaining the part of the one or more OFDM symbols on the physical resources not exceeding the bandwidth of the system spectrum, and sending the part of the one or more OFDM symbols to the terminal, the PBCH may be effectively transmitted at the lower code rate under the condition of limited frequency resources, which thus greatly improves the transmission performance of the PBCH. Moreover, it makes the method for transmitting the PBCH more flexible and effectively applicable to the personalized private network system.

As shown in FIG. 8, a schematic flowchart of a method for transmitting a PBCH according to yet another embodiment of the disclosure. FIG. 8 shows an interaction diagram between a network device and a terminal. The specific description is as follows.

1. The network device encodes a PBCH payload to obtain an encoded bit sequence.
2. The network device performs rate matching on the encoded bit sequence based on a system bandwidth, and maps the encoded bit sequence into a bandwidth of a system spectrum to obtain one or more mapped OFDM symbols.
3. The one or more mapped OFDM symbols is sent to the terminal.
4. The terminal receives the PBCH payload of each SSB sent by the network device.

As shown in FIG. 9, which is a schematic flowchart of a method for transmitting a PBCH according to yet another embodiment of the disclosure. FIG. 9 shows an interaction diagram between a network device and a terminal. The specific description is as follows.

1. The network device encodes a PBCH payload to obtain an encoded bit sequence.
2. Rate matching and resource mapping are performed on the encoded bit sequence based on an SSB time-frequency resource structure to obtain one or more OFDM symbols on physical resources.
3. A part of the one or more OFDM symbols on the physical resources not exceeding a bandwidth of a system spectrum is retained.
4. The part of the one or more OFDM symbols is sent to the terminal.
5. The terminal receives the part of the one or more OFDM symbols sent by the network device.

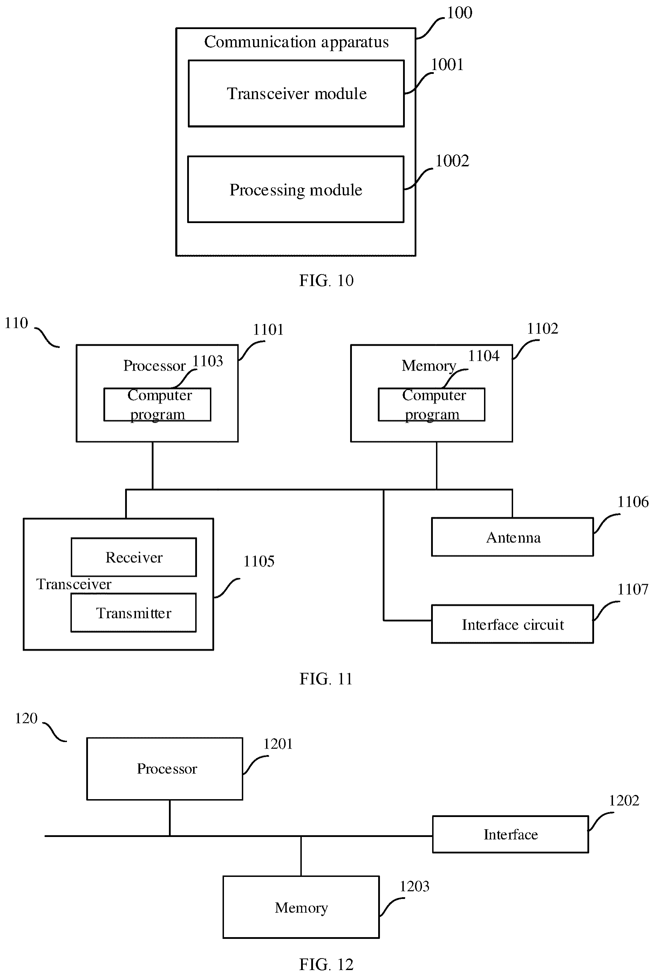

FIG. 10 is a schematic diagram of a communication apparatus according to an embodiment of the disclosure. A communication apparatus 100 shown in FIG. 10 may include a transceiver module 1001 and a processing module 1002. The transceiver module 1001 may include a sending module and/or a receiving module. The sending module is configured for realizing a sending function, and the receiving module is configured for realizing a receiving function. The transceiver module 1001 may realize the sending function and/or the receiving function.

The communication apparatus 100 may be a network device (e.g., the network device in the aforementioned method embodiments), an apparatus in the network device, or an apparatus that may be used together with the network device. Alternatively, the communication apparatus 100 may be a terminal, an apparatus in the terminal, or an apparatus that may be used together with the terminal.

When the communication apparatus 100 is in a network device side, the communication apparatus 100 includes:

a transceiver module 1001, configured to sending, based on a system spectrum with a bandwidth less than a first bandwidth, a PBCH payload of each SSB to a terminal.

By implementing the method of the disclosure, the network device sends, based on the system spectrum with the bandwidth less than the first bandwidth, the PBCH payload of each SSB to the terminal, which may effectively improve the transmission performance of the PBCH under the condition of limited frequency resources.

When the communication apparatus 100 is in a terminal side, the communication apparatus 100 includes:

a transceiver module 1001, configured to receive, based on a system spectrum with a bandwidth less than a first bandwidth, a PBCH payload of each SSB sent by a network device.

By implementing the method of the disclosure, the terminal receives, based on the system spectrum with the bandwidth less than the first bandwidth, the PBCH payload of each SSB sent by the network device, which may effectively improve the transmission performance of the PBCH under the condition of limited frequency resources.

FIG. 11 is a schematic diagram of a communication apparatus according to another embodiment of the disclosure. The communication apparatus 110 may be a terminal (e.g., the terminal in the above method embodiments), a network device (e.g., the network device in the above method embodiments), or a chip, a chip system or a processor that supports the terminal to realize the above-described method, or a chip, a chip system or a processor that supports the network device to realize the above-described method. The apparatus is configured to realize the method described in the above method embodiments with reference to the descriptions of the above-described method embodiments.

The communication apparatus 110 may include one or more processors 1101. The processor 1101 may be a general purpose processor or a dedicated processor, such as, a baseband processor or a central processor. The baseband processor is used for processing communication protocols and communication data. The central processor is used for controlling communication apparatuses (e.g., base station, baseband chip, terminal, terminal chip, CU or DU), executing computer programs, and processing data of the computer programs.

In some embodiments, the communication apparatus 110 may further include one or more memories 1020 on which a computer program 1104 may be stored. A computer program 1103 may be stored in the processor. When the processor 1101 executes the computer program 1104 and/or the computer program 1103, the communication apparatus 110 is caused to perform the method described in the above method embodiments.

In some embodiments, data may also be stored in the memory 1102. The communication apparatus 110 and the memory 1102 may be provided separately or may be integrated together.

In some embodiments, the communication apparatus 110 may also include a transceiver 1105 and an antenna 1106. The transceiver 1105 may be referred to as transceiver unit, transceiver machine, or transceiver circuit, for realizing a transceiver function. The transceiver 1105 may include a receiver and a transmitter. The receiver may be referred to as receiver machine or receiving circuit, for realizing a receiving function. The transmitter may be referred to as transmitter machine or transmitting circuit, for realizing a transmitting function.

In some embodiments, the communication apparatus 110 may also include one or more interface circuits 1107. The interface circuits 1107 are configured to receive code instructions and transmit the code instructions to the processor 1101. The processor 1101 runs the code instructions to cause the communication apparatus 110 to perform the method described in the method embodiments.

In an implementation, the processor 1101 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1101 may store a computer program 1103 that may be run by the processor 1101 and may cause the communication apparatus 110 to perform the method described in the method embodiments above. The computer program 1103 may be solidified in the processor 1101, in which case the processor 1101 may be implemented by hardware.

In an implementation, the communication apparatus 110 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a terminal (e.g., the terminal in the above method embodiments) or a network device (e.g., the network device in the above method embodiments), but the scope of the communication apparatus described in the disclosure is not limited thereto, and the structure of the communication apparatus may not be limited by FIG. 11. The communication apparatus may be a stand-alone device or may be part of a larger device. For example, the communication apparatus may be:

(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and

(6) others.

For the case that the communication apparatus is a chip or a chip system reference may be made to the schematic diagram of the chip shown in FIG. 12, which is a schematic diagram of a chip according to an embodiment of the disclosure. The chip shown in FIG. 12 includes a processor 1201 and an interface 1202. There may be one or more processors 1201, and there are a plurality of interfaces 1202.

In the case where the chip is configured to implement the functions of the network device in the embodiments of the disclosure:

the processor 1201 is configured to implement the method steps in the above embodiments shown in FIGS. 2-4, 8, and 9, etc.

In the case where the chip is used to implement the functions of the terminal in the embodiments of the disclosure:

the processor 1201 is configured to implement the method steps in the above embodiments shown in FIGS. 5-7, 8, and 9, etc.

In some embodiments, the chip further includes a memory 1203 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provides a communication system. The communication system includes: a communication apparatus as a terminal (e.g., the terminal in the aforementioned method embodiments) and a communication apparatus as a network device (e.g., the network device in the aforementioned method embodiments) in the above embodiment of FIG. 10. Alternatively, the communication system includes: a communication apparatus as a terminal (e.g., the terminal in the aforementioned method embodiments) and a communication apparatus as a network device (e.g., the network device in the aforementioned method embodiments) in the above embodiment of FIG. 11.

The disclosure also provides a readable storage medium having an instruction stored thereon. When the instruction is executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality of" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference may be made to the corresponding processes in the preceding method embodiments, and details will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

**Claims**

1. A method for transmitting a physical broadcast channel (PBCH), performed by a network device, comprising:
sending, based on a system spectrum with a bandwidth less than a first bandwidth, a PBCH payload of each synchronization and PBCH block (SSB) to a terminal.

2. The method according to claim 1, wherein the first bandwidth is 5MHz.

3. The method according to claim 1, wherein the bandwidth of the system spectrum is at least one of:

3MHz;
2.8MHz;
3.6MHz; or
a value between 2.8MHz and 3.6MHz.

4. The method according to any one of claims 1 to 3, wherein the PBCH payload does not carry at least one of:

a common sub-carrier spacing (subCarrierSpacingCommon);
a spare;
a message class extension spare (messageClassExtension);
a parameter $a_{A+6}$ ;
a parameter $a_{A+7}$ ; or
SSB index information.

5. The method according to any one of claims 1 to 4, wherein the PBCH payload comprises an SSB subcarrier offset indication, wherein:

the SSB subcarrier offset indication is configured via ssb-SubcarrierOffset;
a configuration parameter of the SSB subcarrier offset indication excludes a parameter $a_{A+5}$ ; and
a range of a valid subcarrier offset value indicated by the SSB subcarrier offset indication is $0 \leq k_{ssb} \leq 11$, and a carrier frequency belongs to a frequency range 1 (FR1), wherein $k_{ssb}$ represents the valid subcarrier offset value.

6. The method according to any one of claims 1 to 5, wherein the PBCH payload comprises a parameter physical downlink control channel configuration for system information block 1 (PDCCH-ConfigSIB1), the parameter PDCCH-ConfigSIB1 excludes 4 most significant bits (MSBs) of controlResourceSetZero, and a control resource set #0 (CORESET#0) associated with the SSB uses a fixed time-frequency domain bandwidth.

7. The method according to any one of claims 1 to 6, wherein the PBCH payload comprises a parameter controlResourceSetZero, and the parameter controlResourceSetZero comprises at least one of:

N least significant bits (LSBs), wherein the N LSBs indicate one or more configuration parameters of first n rows in a CORESET#0 configuration table, and wherein N is less than 4, n is less than or equal to 8, and both N and n are positive integers; or

M bits, wherein the M bits indicate a number of symbols occupied by a CORESET#0, M is less than 4, and M is a positive integer.

8. The method according to claim 7, wherein the CORESET#0 occupies an entire frequency domain channel bandwidth.

9. The method according to any one of claims 1 to 8, wherein the PBCH payload corresponds to one or more cyclic redundancy check (CRC) bits, and a number of CRC bits of the PBCH transmitted by the system spectrum with a bandwidth less than 5MHz is one of 16 bits, 19 bits, or 21 bits.

10. The method according to any one of claims 1 to 9, wherein sending the PBCH payload of each SSB to the terminal comprises:

   encoding the PBCH payload to obtain an encoded bit sequence;
   performing rate matching on the encoded bit sequence based on a system bandwidth, and mapping the encoded bit sequence into the bandwidth of the system spectrum to obtain one or more mapped orthogonal frequency division multiplexing (OFDM) symbols; and
   sending the one or more mapped OFDM symbols to the terminal.

11. The method according to any one of claims 1 to 9, wherein sending the PBCH payload of each SSB to the terminal comprises:

   encoding the PBCH payload to obtain an encoded bit sequence;
   performing rate matching and resource mapping on the encoded bit sequence based on an SSB time-frequency resource structure to obtain one or more OFDM symbols on physical resources;
   retaining a part of the one or more OFDM symbols on the physical resources not exceeding the bandwidth of the system spectrum; and
   sending the part of the one or more OFDM symbols to the terminal.

12. A method for transmitting a physical broadcast channel (PBCH), performed by a terminal, comprising:
   receiving, based on a system spectrum with a bandwidth less than a first bandwidth, a PBCH payload of each synchronization and PBCH block (SSB) sent by a network device.

13. The method according to claim 12, wherein the first bandwidth is 5MHz.

14. The method according to claim 12, wherein the bandwidth of the system spectrum is at least one of:

   3MHz;
   2.8MHz;
   3.6MHz; or
   a value between 2.8MHz and 3.6MHz.

15. The method according to any one of claims 12 to 14, wherein the PBCH payload does not carry at least one of:

   subCarrierSpacingCommon;
   spare;
   messageClassExtension;
   a parameter $a_{A+6}$ ;
   a parameter $a_{A+7}$ ; or
   SSB index information.

16. The method according to any one of claims 12 to 15, wherein the PBCH payload comprises an SSB subcarrier offset indication, wherein:

   the SSB subcarrier offset indication is configured via ssb-SubcarrierOffset;
   a configuration parameter of the SSB subcarrier offset indication excludes a parameter $a_{A+5}$ ; and
   a range of a valid subcarrier offset value indicated by the SSB subcarrier offset indication is $0 \leq k_{ssb} \leq 11$, and a carrier frequency belongs to a FR1, wherein $k_{ssb}$ represents the valid subcarrier offset value.

17. The method according to any one of claims 12 to 16, wherein the PBCH payload comprises a parameter PDCCH-ConfigSIB1, the parameter PDCCH-ConfigSIB1 excludes 4 MSBs of controlResourceSetZero, and a CORESET#0 associated with the SSB uses a fixed time-frequency domain bandwidth.

18. The method according to any one of claims 12 to 17, wherein the PBCH payload comprises a parameter controlResourceSetZero, and the parameter controlResourceSetZero comprises at least one of:

   N LSBs, wherein the N LSBs indicate one or more configuration parameters of first n rows in a CORESET#0 configuration table, and wherein N is less than 4, n is less than or equal to 8, and both N and n are positive integers; or
   M bits, wherein the M bits indicate a number of symbols occupied by a CORESET#0, M is less than 4, and M is a positive integer.

**19.** The method according to claim 18, wherein the CORESET#0 occupies an entire frequency domain channel bandwidth.

**20.** The method according to any one of claims 12 to 19, wherein the PBCH payload corresponds to one or more CRC bits, and a number of CRC bits of the PBCH transmitted by the system spectrum with a bandwidth less than 5MHz is one of 16 bits, 19 bits, or 21 bits.

**21.** The method according to any one of claims 12 to 20, wherein receiving the PBCH payload of each SSB sent by the network device comprises:
receiving one or more mapped orthogonal frequency division multiplexing (OFDM) symbols sent by the network device, wherein the one or more mapped OFDM symbols are obtained by performing, based on a system bandwidth, rate matching on an encoded bit sequence encoded from the PBCH payload, and by mapping the encoded bit sequence into the bandwidth of the system spectrum.

**22.** The method according to any one of claims 12 to 20, wherein receiving the PBCH payload of each SSB sent by the network device comprises:
receiving a part of one or more OFDM symbols sent by the network device, wherein the part of the one or more OFDM symbols are one or more OFDM symbols on physical resources not exceeding the bandwidth of the system spectrum, and are obtained by performing, based on an SSB time-frequency resource structure, rate matching and resource mapping on an encoded bit sequence encoded from the PBCH payload.

**23.** A communication apparatus, comprising:
a transceiver module, configured to send, based on a system spectrum with a bandwidth less than a first bandwidth, a PBCH payload of each SSB to a terminal.

**24.** A communication apparatus, comprising:
a transceiver module, configured to receive, based on a system spectrum with a bandwidth less than a first bandwidth, a PBCH payload of each SSB sent by a network device.

**25.** A communication system, comprising a network device and a terminal, wherein the network device is configured to execute the method according to any one of claims 1 to 11, and the terminal is configured to execute the method according to any one of claims 12 to 22.

**26.** A computer-readable storage medium for storing instructions that, when executed, cause the method according to any one of claims 1 to 22 to be imple-

mented.

EP 4 668 989 A1

Network device 101        Terminal 102

FIG. 1

A PBCH payload of each SSB is sent to a terminal based on a system spectrum with a bandwidth less than the first bandwidth.    S201

FIG. 2

A PBCH payload is encoded to obtain an encoded bit sequence.    S301

Rate matching is performed on the encoded bit sequence based on a system bandwidth, and the encoded bit sequence is mapped into the bandwidth of the system spectrum to obtain one or more mapped OFDM symbols, where the bandwidth of the system spectrum is less than the first bandwidth.    S302

The one or more mapped OFDM symbols are sent to the terminal.    S303

FIG. 3

A PBCH payload is encoded to obtain an encoded bit sequence. S401

Rate matching and resource mapping are performed on the encoded bit sequence based on an original SSB time-frequency resource structure to obtain one or more OFDM symbols on physical resources. S402

A part of the one or more OFDM symbols on the physical resources not exceeding the bandwidth of the system spectrum, where the bandwidth of the system spectrum is less than the first bandwidth. S403

The part of the one or more OFDM symbols is sent to the terminal. S404

FIG. 4

Based on a system spectrum with a bandwidth less than a first bandwidth, a PBCH payload of each SSB sent by a network device is received. S501

FIG. 5

One or more mapped OFDM symbols sent by a network device is received, in which the one or more mapped OFDM symbols are obtained by performing, based on a system bandwidth, rate matching on an encoded bit sequence encoded from the PBCH payload, and by mapping the encoded bit sequence into the bandwidth of the system spectrum. S601

FIG. 6

A part of one or more OFDM symbols sent by a network device is received, in which the part of the one or more OFDM symbols are one or more OFDM symbols on physical resources not exceeding the bandwidth of the system spectrum, and are obtained by performing, based on an SSB time-frequency resource structure, rate matching and resource mapping on an encoded bit sequence encoded from the PBCH payload.

S701

FIG. 7

Network device

Terminal

Encoding a PBCH payload to obtain an encoded bit sequence

Performing rate matching and mapping to obtain one or more mapped OFDM symbols

The one or more mapped OFDM symbols is sent to the terminal

Receiving the PBCH payload of each SSB sent by the network device

FIG. 8

Network device

Terminal

Encoding a PBCH payload to obtain an encoded bit sequence

Performing rate matching and resource mapping to obtain one or more OFDM symbols on physical resources, and remaining a part of the one or more OFDM symbols on the physical resources not exceeding a bandwidth of a system spectrum

The part of the one or more OFDM symbols is sent to the terminal

Receiving the part of the one or more OFDM symbols sent by the network device

FIG. 9

100

Communication apparatus

Transceiver module 1001

Processing module 1002

FIG. 10

110

Processor 1101

Computer program 1103

Memory 1102

Computer program 1104

Receiver

Transceiver 1105

Transmitter

Antenna 1106

Interface circuit 1107

FIG. 11

120

Processor 1201

Interface 1202

Memory 1203

FIG. 12

## INTERNATIONAL SEARCH REPORT

| International application No. |
| --- |
| **PCT/CN2023/076027** |

| A. | CLASSIFICATION OF SUBJECT MATTER |
| --- | --- |

H04W72/30(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT: DWPI; ENTXTC; ENTXT; CNKI; 3GPP: 带宽, 同步信号和物理广播信道PBCH块, 物理广播信道, 小于, 有效载荷, bandwidth, PBCH, SSB, less than, payload

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111345072 A (BEIJING XIAOMI MOBILE SOFTWARE CO., LTD.) 26 June 2020 (2020-06-26)<br>description, paragraphs 88-121 | 1-26 |
| A | CN 111344988 A (QUALCOMM INC.) 26 June 2020 (2020-06-26)<br>entire document | 1-26 |
| A | CN 115694735 A (GUANGDONG OPPO MOBILE COMMUNICATIONS CO., LTD.) 03 February 2023 (2023-02-03)<br>entire document | 1-26 |
| A | WO 2023006067 A1 (HUAWEI TECHNOLOGIES CO., LTD.) 02 February 2023 (2023-02-02)<br>entire document | 1-26 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 October 2023** | **13 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/076027**

| Patent document cited in search report | | | Publication date (day/month/year) | Patent family member(s) | | | Publication date (day/month/year) |
|---|---|---|---|---|---|---|---|
| CN | 111345072 | A | 26 June 2020 | WO | 2021159492 | A1 | 19 August 2021 |
| | | | | US | 2023075764 | A1 | 09 March 2023 |
| CN | 111344988 | A | 26 June 2020 | WO | 2019099511 | A1 | 23 May 2019 |
| | | | | US | 2019150068 | A1 | 16 May 2019 |
| | | | | US | 11147008 | B2 | 12 October 2021 |
| | | | | EP | 3711242 | A1 | 23 September 2020 |
| | | | | IN | 202027014261 | A | 04 September 2020 |
| CN | 115694735 | A | 03 February 2023 | | None | | |
| WO | 2023006067 | A1 | 02 February 2023 | CN | 115696521 | A | 03 February 2023 |